# EUROPÄISCHE PATENTANMELDUNG

(11) **EP 1 739 665 A1**
(43) Veröffentlichungstag der Anmeldung: **03.01.2007**
(21) Anmeldenummer: 05105700.8
(22) Anmeldetag: 27.06.2005
(51) Int. Cl.: G11B 7/08

(54) **Abtasteinrichtung für optische Platten**

(71) Anmelder: DEUTSCHE THOMSON-BRANDT GMBH, 78048 Villingen-Schwenningen (DE)
(72) Erfinder: Burkart, Harald, 78054, VS-Schwenningen (DE); Dupper, Rolf, 78050, VS-Villingen (DE); Tabor, Günter, 78056, VS-Schwenningen (DE)
(74) Vertreter: Thies, Stephan

(57) **Zusammenfassung**

Die Erfindung betrifft eine Abtasteinrichtung für optische Platten, die ein optisches Gehäuse (1) mit angeformten Gleitflächen zur Aufnahme einer mit Gegengleitflächen versehenen und um eine virtuelle Achse verstellbaren Abtasteinheit mit einem Träger (8) mit einem auf diesem angeordneten Abtastkopf (5) aufweist, wobei die Abtasteinheit mit wenigstens einer am Gehäuse (1) abgestützten und am Träger (8) angreifenden Stellschraube (9) und mit wenigstens einem Federmittel, das auf der der Stellschraube (9) abgewandten Seite der Gleitflächen am Träger (8) angreift, gegen die Gleitflächen gespannt und durch die Stellschraube (9) verstellbar ist. Sie löst die Aufgabe, eine derartige Abtasteinrichtung für optische Platten so zu gestalten, dass der Bauraum für das am Träger angreifende Federmittel minimiert ist und sich ein gesondertes Befestigungselement für dieses erübrigt. Dazu ist das Federmittel als Bügelfeder (10) ausgebildet, mit einem langgestreckten Federschenkel (101) und einem quer zu diesem ausgebildeten Anlageschenkel (102), die an ihrem einen Ende mit dem Anlageschenkel (102) den Träger (8) mit einer Anpresskraft beaufschlagt und an ihrem anderen Ende im Abstand von der Beaufschlagungsstelle am Gehäuse (1) abgestützt ist.

## Beschreibung

Die Erfindung betrifft eine Abtasteinrichtung für optische Platten, insbesondere zur Anordnung in einem Gerät zum Lesen und/ oder Beschreiben optischer Platten, im folgenden auch als Disks oder Speichermedien bezeichnet, wobei die Abtasteinrichtung Informationen oder Daten in wenigstens einer Spur der jeweiligen optischen Platte liest oder speichert. Als optische Platten werden insbesondere als CD bekannte Compact Discs, als DVD bekannte Digital Versatile Discs, CD-ROMs oder DVD-ROMs oder wiederbeschreibbare CDs oder DVDs verstanden.

Eine Abtasteinrichtung weist ein optisches Gehäuse und eine als Aktuator bekannte optische Abtasteinheit auf. Das optische Gehäuse ist schräg oder senkrecht zur jeweiligen Aufzeichnungsspur eines plattenförmigen optischen Aufzeichnungsträgers (optische Platte) schlittenartig verfahrbar und als Pickup bekannt. Es ist mit hoher Geschwindigkeit und hoher Positioniergenauigkeit elektromotorisch angetrieben bewegbar, verbunden mit einer kurzen Zugriffszeit auf unterschiedliche Orte des Aufzeichnungsträgers. Der Aktuator emittiert einen Laserstrahl auf den Aufzeichnungsträger und empfängt den von dort reflektierten Strahl. Die eine Fokuslinse aufweisende Abtasteinheit ist mit einem plattenförmigen Träger an dem an Führungsstangen verfahrbaren Gehäuse verstellbar gehaltert, um die Fokuslinse nach dem optischen Pfad des optischen Gehäuses ausrichten zu können. Letzteres ist erforderlich, weil die Abtasteinrichtung eine Reihe optischer Komponenten zur Lenkung und Ausrichtung des Laserstrahls auf dem Weg zum jeweiligen Aufzeichnungsträger und von diesem zu einem Detektor aufweist, die ebenso wie die diese haltenden und verbindenden mechanischen Teile spezifische Fertigungs- und Montagetoleranzen haben.

Damit die jeweilige optische Platte positionsgenau beleuchtet und ihre Daten dem Detektor präzise übermittelt werden können, ist eine Justierung der Fokuslinse bei der Montage der Abtasteinrichtung durch eine Neigungsänderung der Abtasteinheit vorgesehen, wie das beispielsweise in der EP 0649130 A, der EP 0872832 A und der US 2001/0050899 A beschrieben ist. Die Neigungsänderung erfolgt dabei über den Träger um eine virtuelle Achse, der mit wenigstens einer Gleitfläche auf wenigstens einer am optischen Gehäuse angeformten Tragfläche ruht. Die Flächen sind insbesondere kugel- oder zylinderförmig ausgebildet, und der Träger ist mit einer exzentrisch am Gehäuse angeordneten Stellschraube und mit einem exzentrisch angeordneten Federmittel an die Tragfläche gespannt und kann durch Drehung der Stellschraube verstellt werden.

Als Federmittel kommen Zugfedern und Blattfedern zum Einsatz. Die Abtasteinrichtung nach der US 2001/0050899 A ist mit einer U-förmig gebogenen Blattfeder versehen, die mit einem ihrer zwei Schenkel mit einem Befestigungsabschnitt am Gehäuse befestigt ist und mit ihrem anderen Schenkel elastisch am Träger anliegt, wobei die beiden Schenkel gegenüber dem Befestigungsabschnitt geneigt sind und der am Träger anliegende Schenkel eine elastische Anpresskraft auf den Träger ausübt, die in ihrer Richtung in Bezug auf die Achse der Stellschraube geneigt ist. Dadurch hat die auf den Träger ausgeübte Anpresskraft eine Komponente senkrecht zum Träger und eine Komponente parallel zu diesem, sodass es möglich ist, den Neigungswinkels des Trägers gleichmäßig und mit hoher Empfindlichkeit einzustellen. Der Befestigungsabschnitt der Blattfeder ist bevorzugt durch eine Befestigungsschraube am Gehäuse festgelegt. Auf Grund der sehr kleinen Abmessungen der Abtasteinheit ist die Platzierung und Befestigung des Federmittels erschwert, zumal die Abtasteinheit nicht von allen Seiten frei zugänglich ist. Es kann somit als nachteilig angesehen werden, dass die beschriebene Blattfeder ein gesondertes Befestigungselement erfordert und erhöhte Montagekosten anfallen. Überdies erfordert die Blattfeder einen durch ihre Ausdehnung bestimmten Bauraum über und neben dem Träger. Es ist eine Aufgabe der Erfindung, eine derartige Abtasteinrichtung zu verbessern.

Erfindungsgemäß ist das Federmittel, welches den Träger mit dem Abtastkopf als Abtasteinheit an das optische Gehäuse einer Abtasteinrichtung im Zusammenwirken mit einer Stellschraube spannt, eine Bügelfeder mit einem langgestreckten Federschenkel und einem quer zu diesem ausgebildeten Anlageschenkel, die an ihrem einen Ende mit dem Anlageschenkel den Träger mit einer Anpresskraft beaufschlagt und an ihrem anderen Ende im Abstand von der Beaufschlagungsstelle am Gehäuse abgestützt ist, wobei diese Abstützung frei von separaten Befestigungsmitteln ist. Die Stellschraube steht hier stellvertretend für andere Stellvorrichtungen wie Keilanordnungen oder Ähnliches, die auch erforderlichenfalls mit einer Rastvorrichtung versehen sein können. Eine Bügelfeder wie beschrieben benötigt keinen größeren Bau- und Montageraum. Sie ist einfach herstellbar, leicht montierbar und verursacht nur geringe Kosten.

Bevorzugt greift die Bügelfeder mit ihrem Anlageschenkel auf der dem Gehäuse abgewandten Seite am Träger vorgespannt an, insbesondere an einem an diesem ausgebildeten Ansatz, und beaufschlagt den Träger in Richtung auf das Gehäuse hin mit einer Anpresskraft, so dass der Träger gegen die Gleitflächen gespannt wird. Dieser Anlageschenkel ist beispielsweise an einer am Federschenkel ausgebildeten hakenförmigen Abwinklung ausgebildet.

Die Anordnung der Bügelfeder erfolgt derart, dass deren Abstützstelle am Gehäuse auf der Seite der am Träger angreifenden Stellschraube und damit auf der der Abwinklung abgewandten Seite der Gleitflächen gegeben ist. Dadurch ergibt sich ein erheblicher Abstand zwischen der Abstützstelle der Bügelfeder am Gehäuse und deren Angriffstelle am Träger, wodurch eine sanfte und ruckelfreie Einstellbewegung des Trägers durch die Stellschraube ermöglicht ist.

Zur Minimierung ihres Bauraumes ist die Bügelfeder vorteilhafterweise mit ihrem Federschenkel in einer am Gehäuse ausgebildeten nutartigen Vertiefung geführt, wobei die hakenförmige Abwinklung gegenüber dem Federschenkel angewinkelt ist und aus der Vertiefung spitzwinklig zum Gehäuse herausragt.

Der Federschenkel ist bevorzugt zu seiner Abstützung am Gehäuse nach der der angewinkelten hakenförmigen Abwinklung abgewandten Seite widerhakenseitig umgebogen und mit dem umgebogenen Endstück in einem am Gehäuse ausgebildeten Widerlager verklemmt. Dabei ist das Widerlager durch Begrenzungsflächen eines gegenüber der nutartigen Vertiefung bzw. der Gehäuseoberfläche geneigten Verankerungskanals gebildet, dessen Neigung geringer als die des Endstückes ist. Dieser Kanal, dessen Querschnitt erheblich größer als der des Endstückes ist, weist eine Abstützfläche für einen Bereich des bogenförmig gekrümmten Teils des umgebogenen Endes des Federschenkels und eine Anlagekante für die Innenseite des umgebogenen Endstückes auf, wobei letztere vorteilhaft an einem Absatz ausgebildet ist. Bei der Festlegung des Endstückes in diesem Verankerungskanal wird der Federschenkel in die Vertiefung gedrückt und gegen diese gespannt und dadurch mit dem Endstück im Verankerungskanal verklemmt. Der Federschenkel liegt dadurch vorgespannt in der Vertiefung und kann im Abstand vom Widerlager gegen seine Federkraft elastisch angehoben und mit dem Träger in Eingriff gebracht werden.

Der Träger erstreckt sich parallel zu einer virtuellen Achse an am Gehäuse ausgebildeten Gleitböcken, an deren freien Stirnseiten sich die Gleitflächen befinden. Dabei dienen die Gleitböcke zugleich als Führungsmittel für den Träger bei einer Verstellbewegung um die virtuelle Achse und weisen dazu auf ihrer dem Träger zugewandten Seite seitliche Führungsflächen für den Träger auf.

Die Gleitflächen sind am Gehäuse bevorzugt konkav gegenüber dem Träger angeordnet und/ oder ausgebildet, so dass der Träger mit seinen Gegengleitflächen wannenartig aufgenommen ist. Dabei können die Gleitflächen kugel- oder zylinderförmig gestaltet sein. Vorteilhaft sind diese und die formschlüssig anliegenden Gegengleitflächen jedoch zylinderförmig ausgebildet, um eine Stellbewegung des Trägers in nur einer festgelegten Richtung zuzulassen. Bei den gehäuseseitigen Gleitflächen ist alternativ zur zylindrischen Ausbildung auch eine ebene prismatische Ausbildung möglich, an deren geneigten Flanken die zylindrischen Gegengleitflächen parallel zur virtuellen Achse linienförmig anliegen.

Die Erfindung wird nachstehend anhand eines Ausführungsbeispiels erläutert. In den zugehörigen Zeichnungen zeigen:
Fig. 1 eine Abtasteinrichtung gemäß der Erfindung in einer perspektivischen Darstellung,
Fig. 2 das optische Gehäuse der Abtasteinrichtung aus Fig. 1 mit dem Träger für den Abtastkopf in einer perspektivischen Darstellung,
Fig. 3 das optische Gehäuse der Abtasteinrichtung mit einer an diesem angeordneten Bügelfeder,
Fig. 4 eine Draufsicht auf das optische Gehäuse, gegenüber Fig. 3 um 180° verdreht,
Fig. 5 einen Schnitt V - V durch das Gehäuse mit angeordneter Bügelfeder und
Fig. 6 die Verankerung der Bügelfeder im Gehäuse, gegenüber Fig. 5 vergrößert.

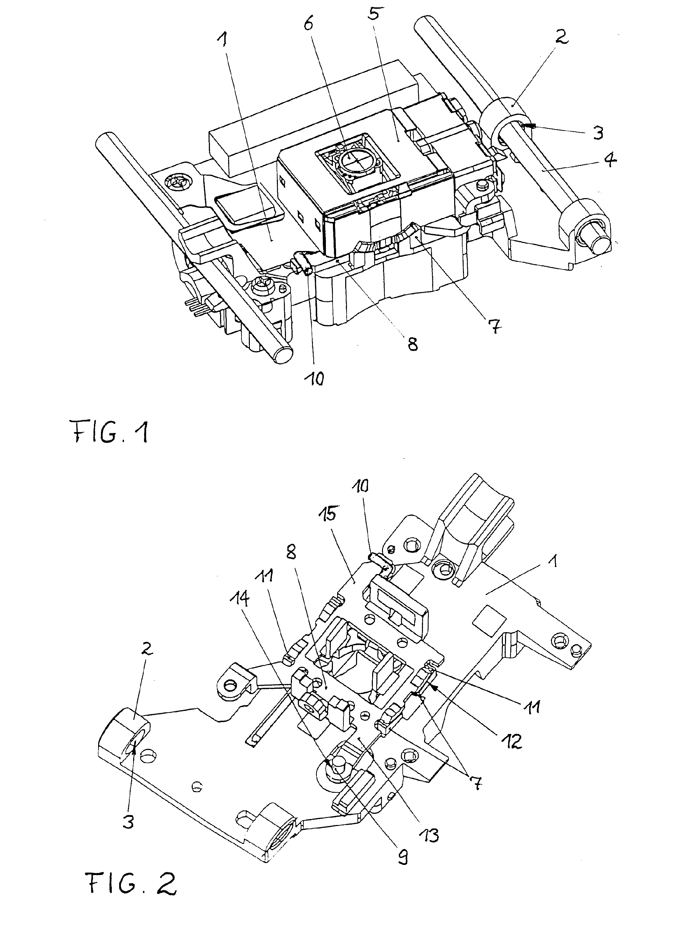

Fig. 1 zeigt eine optische Abtasteinrichtung mit einem optischen Gehäuse 1 aus Zinkdruckguss oder Kunststoff mit Führungsböcken 2 für eine lineare Bewegung, in die Bohrungen 3 zur Anordnung an einer Führungsstange 4 eingebracht sind, und mit einem Abtastkopf 5 mit einer Fokuslinse 6. Der Abtastkopf 5 ist mit einem durch ihn teilweise verdeckten und am Gehäuse 1 auf Gleitböcken 7 verstellbar befestigten Träger 8 fest verbunden und wird zusammen mit dem Träger 8 vermittels einer am Gehäuse 1 abgestützten Stellschraube 9 (Fig. 2) und einer Bügelfeder 10 aus Federstahldraht gegen die Gleitböcke 7 gespannt. Die Stellschraube 9 und die Bügelfeder 10 greifen jeweils im Abstand von den Gleitböcken 7 am Träger 8 an und sind dabei diagonal gegenüberliegend angeordnet.

In Fig. 2 ist die Halterung des Trägers 8 am Gehäuse 1 deutlich zu erkennen. Die am Gehäuse 1 angeformten Gleitböcke 7 sind an ihren Oberseiten mit konkav gekrümmten zylindrischen Gleitflächen 11 zur Aufnahme des Trägers 8 versehen, der dazu mit den Gleitflächen 11 korrespondierende Gegengleitflächen 12 aufweist, die konvex gekrümmt, zylindrisch ausgebildet und formschlüssig an den Gleitflächen 11 anliegen. Die Stellschraube 9 steht mit einer am Träger 8 angeformten Lasche 13 in Eingriff, die dazu eine Gewindebohrung 14 aufweist. Auf der der Stellschraube 9 abgewandten Seite des Trägers 8 ist diagonal zur Lasche 13 eine weitere Lasche 15 ausgebildet, an deren vom Gehäuse 1 abgewandter Seite im Abstand von den Gleitflächen 11 die am Gehäuse 1 verankerte Bügelfeder 10 angreift, die dadurch den Träger 8 vorgespannt an die Gleitflächen 11 drückt. Die am Gehäuse 1 vorstehenden und dem Träger 8 zugewandten inneren Seitenflächen der Gleitböcke 7 stellen Führungsflächen für den Träger 8 dar, die dessen Verkanten verhindern.

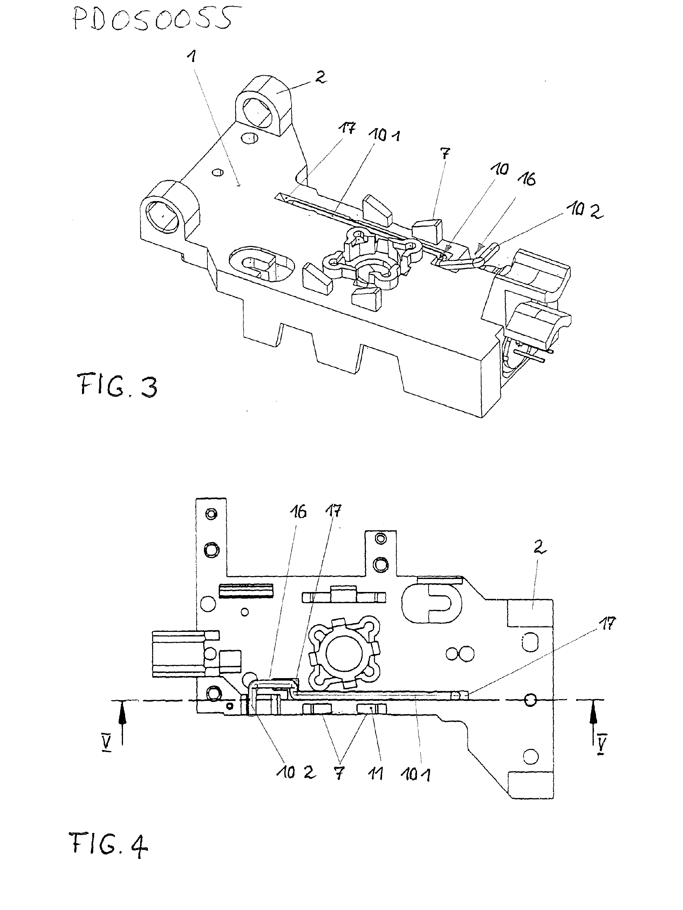

In den Fig. 3 und 4 ist die Anordnung und Ausbildung der Bügelfeder 10 dargestellt. Diese weist einen langgestreckten Federschenkel 101 und einen quer zu diesem ausgebildeten Anlageschenkel 102 auf, mit dem sie den Träger 8 (hier nicht dargestellt) an das Gehäuse 1 anpresst. Der Anlageschenkel 102 ist an einer am Federschenkel 101 ausgebildeten hakenförmigen Abwinklung 16 ausgebildet. Insbesondere in Fig. 3 ist zu erkennen, dass der Federschenkel 101 in einer am Gehäuse 1 ausgebildeten nutartigen Vertiefung 17 geführt ist, und dass die hakenförmige Abwinklung 16 gegenüber dem Federschenkel 101 angewinkelt ist und aus der Vertiefung 17 spitzwinklig zum Gehäuse 1 herausragt, um auf diese Weise die Lasche 15 mit dem Anlageschenkel 102 zu übergreifen.

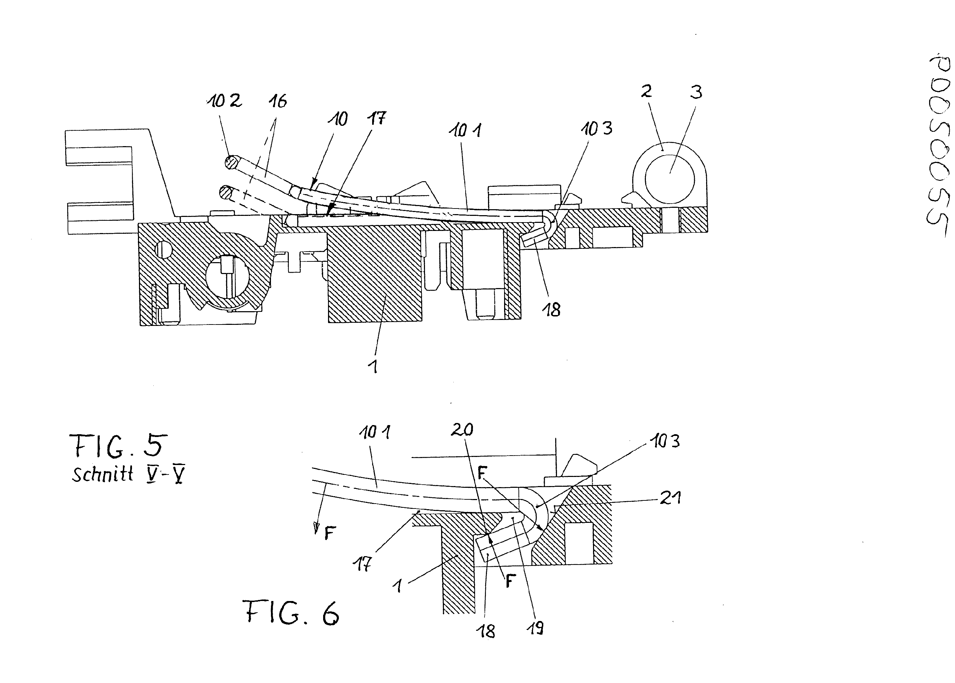

Der Federschenkel 101 ist an seinem abstützseitigen Ende in der Vertiefung 17 in Richtung auf die der angewinkelten hakenförmigen Abwinklung 16 abgewandte Seite hin widerhakenartig umgebogen in einem Krümmungsteil 103 und mit dem umgebogenen Endstück 18 in einem am Gehäuse 1 ausgebildeten Widerlager verklemmt, was in dem in Fig. 5 dargestellten Schnitt V - V gezeigt ist. Die Darstellung zeigt in gestrichelten Linien die Anordnung der Bügelfeder 10 in der Vertiefung 17 außer Eingriff mit der Lasche 15 des Trägers 8 gemäß Fig. 3, wobei die Bügelfeder 10 infolge ihrer Klemm-Verankerung im Gehäuse 1 schon vorgespannt in Richtung auf das Gehäuse 1 hin in der Vertiefung 17 liegt. In durchgezogenen Linien ist die aus der Vertiefung 17 elastisch herausgebogene Bügelfeder 10 dargestellt, die in einer derartigen Stellung mit der nicht dargestellten Lasche 15 in Eingriff steht und insbesondere durch die elastische Verbiegung des Federschenkels 101 eine erhöhte Vorspannung hat.

Die Klemm-Verankerung selbst ist in Fig. 6 vergrößert dargestellt. Das zur Verankerung dienende und im Gehäuse 1 ausgebildete Widerlager ist ein gegenüber der Gehäuseoberfläche in der Richtung des umgebogenen Endstückes 18 geneigter Verankerungskanal 19, dessen Neigung jedoch geringer als die des Endstückes 18 zum Federschenkel 101 ist. Der Verankerungskanal 19 weist eine Anlagekante 20 für die Innenseite des Endstückes 18 auf, die durch eine Abstufung im Verankerungskanal 19 erzeugt ist, und bietet für den Bereich des bogenförmigen Krümmungsteils 103 der Bügelfeder 10 eine Abstützfläche 21. Durch die Anordnung des umgebogenen Endes im Verankerungskanal 19 wird infolge des Neigungsunterschiedes zwischen diesem und dem umgebogenen Endstück 18 und die Anlage des Federschenkels 101 in der Vertiefung 17 der Krümmungsteil 103 durch Erzeugung einer Spannung in der Bügelfeder 10 elastisch leicht aufgebogen, die im Federschenkel 10 die oben erwähnte Vorspannung im Federschenkel 10 hervorruft. Die Vorspannkräfte F sind angedeutet.

Muss die Position oder insbesondere die Ausrichtung der Fokuslinse 6 korrigiert werden, kann der Träger 8 mit dem Abtastkopf 5 um eine virtuelle Achse auf den Gleitflächen 11 gleitend gedreht werden, wodurch sich dessen Neigung gegenüber dem Gehäuse 1 ändert. Diese Korrektur erfolgt durch eine Betätigung der Stellschraube 9, wobei die Bügelfeder 10 den Träger 8 an die Gleitflächen 11 spannt.

## Patentansprüche

1. Abtasteinrichtung für optische Platten, mit einem optischen Gehäuse (1) mit angeformten Gleitflächen (11) zur Aufnahme einer mit Gegengleitflächen (12) versehenen und um eine virtuelle Achse verstellbaren Abtasteinheit mit einem Träger (8) mit einem auf diesem angeordneten Abtastkopf (5), mit wenigstens einer am Gehäuse (1) abgestützten und am Träger (8) angreifenden Stellschraube (9) und mit wenigstens einem Federmittel, das auf der der Stellschraube (9) abgewandten Seite der Gleitflächen (11) am Träger (8) angreift und diesen gegen die Gleitflächen (11) des Gehäuses (1) drückt, **dadurch gekennzeichnet, dass** das Federmittel eine Bügelfeder (10) mit einem langgestreckten Federschenkel (101) und einem quer zu diesem ausgebildeten Anlageschenkel (102) ist, die an ihrem einen Ende mit dem Anlageschenkel (102) den Träger (8) mit einer Anpresskraft beaufschlagt und an ihrem anderen Ende im Abstand von der Beaufschlagungsstelle am Gehäuse (1) abgestützt ist.

2. Abtasteinrichtung nach Anspruch 1, **dadurch gekennzeichnet, dass** der Anlageschenkel (102) auf der dem Gehäuse abgewandten Seite am Träger (8), insbesondere an einem an diesem ausgebildeten Ansatz (15), vorgespannt angreift und den Ansatz (15) in Richtung auf das Gehäuse (1) hin beaufschlagt.

3. Abtasteinrichtung nach Anspruch 1 oder 2, **dadurch gekennzeichnet, dass** die Bügelfeder (10) auf der Seite der am Träger (8) angreifenden Stellschraube (9) am Gehäuse (1) abgestützt ist.

4. Abtasteinrichtung nach Anspruch 1 oder 2, **dadurch gekennzeichnet, dass** der Anlageschenkel (102) an einer am Federschenkel (101) ausgebildeten hakenförmigen Abwinklung (16) ausgebildet ist.

5. Abtasteinrichtung nach Anspruch 4, **dadurch gekennzeichnet, dass** der Federschenkel (101) in einer am Gehäuse (1) ausgebildeten nutartigen Vertiefung (17) geführt ist, und dass die Abwinklung (16) gegenüber dem Federschenkel (101) angewinkelt ist und aus der Vertiefung (17) spitzwinklig zum Gehäuse (1) herausragt.

6. Abtasteinrichtung nach Anspruch 5, **dadurch gekennzeichnet, dass** der Federschenkel (101) an seinem abstützseitigen Ende nach der der angewinkelten Abwinklung (16) abgewandten Seite in einem Krümmungsteil (103) widerhakenartig umgebogen ist und mit einem umgebogenen Endstück (18) in einem am Gehäuse (1) ausgebildeten Widerlager verklemmt ist.

7. Abtasteinrichtung nach Anspruch 6, **dadurch gekennzeichnet, dass** das Widerlager ein gegenüber der Oberfläche des Gehäuses (1) geneigter Verankerungskanal (19) ist, dessen Neigung geringer als die des Endstückes (18) zum Federschenkel (101) ist.

8. Abtasteinrichtung nach Anspruch 7, **dadurch gekennzeichnet, dass** der Verankerungskanal (19) eine Abstützfläche (21) für den Krümmungsteil (103) der Bügelfeder (10) und eine Anlagekante (20) für die Innenseite des umgebogenen Endstückes (18) aufweist.

9. Abtasteinrichtung nach einem oder mehreren der vorhergehenden Ansprüche, **dadurch gekennzeichnet, dass** die Bügelfeder (10) aus Federstahldraht gebildet ist.

10. Abtasteinrichtung nach Anspruch 1, **dadurch gekennzeichnet, dass** die am Gehäuse (1) angeordneten Gleitflächen (11) an Gleitböcken (7) ausgebildet sind, die auf ihrer dem Träger (8) zugewandten Seite seitliche Führungsflächen für diesen ausbilden.

11. Abtasteinrichtung nach Anspruch 1 oder 10, **dadurch gekennzeichnet, dass** die Gleitflächen (11) gegenüber dem Träger (8) konkav ausgebildet sind.

12. Abtasteinrichtung nach Anspruch 1, **dadurch gekennzeichnet, dass** die am Träger (8) ausgebildeten Gegengleitflächen (12) mit den Gleitflächen (11) des Gehäuses (1) in ihrer Form korrespondieren und formschlüssig an diesen anliegen.

13. Gerät zum Lesen und/oder Beschreiben optischer Speichermedien, **dadurch gekennzeichnet, dass** es eine Abtasteinrichtung nach einem oder mehreren der vorhergehenden Ansprüche aufweist.
